# EUROPEAN PATENT SPECIFICATION

(11) **EP 3 632 211 B1**
(45) Date of publication and mention of the grant of the patent: **27.04.2022**
(21) Application number: 18832345.5
(22) Date of filing: 03.04.2018
(51) Int. Cl.: A21C 9/06, A21C 11/16

(54) **STUFFED FOOD PROCESSING DEVICE**
VERARBEITUNGSVORRICHTUNG FÜR GEFÜLLTE NAHRUNGSMITTEL
DISPOSITIF DE TRAITEMENT D'ALIMENTS FARCIS

(30) Priority: 11.07.2017 CN 201710558922
(43) Date of publication of application: 08.04.2020
(73) Proprietor: Jia, Qingyi, Beijing 100078 (CN)
(72) Inventor: Jia, Qingyi, Beijing 100078 (CN)
(74) Representative: Vitina, Maruta
(86) International application number: PCT/CN2018/081738
(87) International publication number: WO 2019/011014

(56) References cited:
- CN-A- 101 856 100
- CN-A- 104 585 265
- CN-A- 105 076 283
- CN-A- 105 248 502
- CN-A- 107 156 216
- US-A1- 2005 072 318
- US-A1- 2007 122 516
- US-A1- 2011 062 621

## Description

### TECHNICAL FIELD

The application relates to food processing, and more particularly to a method and a device for processing food with stuffing.

### BACKGROUND OF THE INVENTION

Commercially-available dumpling making machines have complex components and large size, which are not suitable for home use. A dumpling making machine for home use may appear if dumplings prepared by the machines are no longer required to have the shape of handmade dumplings.

In order to overcome the shortcomings of the commercially-available dumpling making machines, the invention provides a simplified and compact dumpling making machine, in which a dumpling wrapper making device and a stuffing-bearing device are separated.

An application US2005072318A1 discloses a multiple layer food manufacturing apparatus comprises a combining nozzle, a right feeding device, a left feeding device, and a cutter. The outer layer food material is inputted to an outer layer channel from the right feeding device. The middle layer food material is inputted to an inner layer channel from the left feeding device. The inner layer food material is inputted to an inner tube of the combining nozzle so that the combining nozzle outputs the inner, middle and outer layer food material from a small, a middle and an outer outlet so form as a cylindrical food. The cylindrical food passes through a cutter to be cut as a ball-like food. In the processing process in the combining nozzle, the middle and outer layer food material are agitated effectively.

An application US2011062621A1 discloses an apparatus and method for forming food into doughnut shape that is capable of forming food into rings with a simple structure. The apparatus includes a supplying unit supplying a food material 2; a discharging unit 3 continuously discharging the supplied food material through a nozzle; a forming unit 4 dividing the food material into rings; a conveyor belt 5 carrying the resulting doughnut-shaped food products; and a support unit 6 supporting the products. The supplying unit 2 supplies an outer food material F and an inner food material G to the discharging unit 3 under pressure. The discharging unit 3 includes an inside forming member 32, around which the inner food material G is intermittently discharged from an annular outlet 34, and the outer food material is continuously discharged to sandwich the inner food material G, resulting in formation of a tubular food material. The forming unit 4 includes a plurality of shutter members 40 disposed around the discharging unit 3, and moves the shutter members 40 to divide the continuously discharged tubular food material into pieces of a doughnut shape.

### SUMMARY OF THE INVENTION

The invention aims to provide a device for processing food with stuffing, which can prepare dumplings having appearances that are slightly different from handmade dumplings. This invention fully utilizes rotational motion of mechanical components which is easily realized, and integrates an extrusion forming mechanism with a feeding mechanism, resulting in a simplified and compact dumpling making machine.

The technical solution of the invention is described as follows.

A device for processing food with stuffing includes a casing (1), an inclined auger (5), a vertical auger (8), a first pressing edge (9) and a second pressing edge (10).

The casing (1) is hollow and has an inverted cone shape. An upper end of the casing (1) is open, and a lower end of the casing (1) has radial shrinkage to form an annulus (4). The annulus (4) protrudes downward and is located at a middle of the radial shrinkage. Two link-shafts (3) are horizontally provided on an outer surface of the casing (1). Axes of the two link-shafts are coincident and perpendicularly intersect with a center axis of the casing (1).

The inclined auger (5) is hollow and has an inverted cone shape. An upper end of the inclined auger (5) is open. A conicity of an external profile of the inclined auger is adapted to a conicity of the casing (1) to have an inverted cone shape. A vertical cylindrical tube (6) is connected to a distal (lower) end of the inclined auger. The inclined auger (5) has an inner cavity formed in a hollow stem of the inclined auger (5). The inner cavity of the inclined auger (5) is a stuffing-bearing space (7). The inner cavity of the inclined auger (5) has an inverted cone shape.

The vertical auger (8) is arranged in the inner cavity of the inclined auger (5).

The first pressing edge (9) and the second pressing edge (10) are linked to the two link-shafts (3) on the casing (1).

The device for processing the food with stuffing provided herein is assembled through making axes of the casing (1), the inclined auger (5) and the vertical auger (8) coincide, and aligning bottom ends of the casing (1), the inclined auger (5) and the vertical auger (8), and installing the first pressing edge (9) and the second pressing edge (10) on the two link-shafts (3).

The invention provides three functional mechanisms, including: an extrusion forming mechanism (100), a feeding mechanism (200) and a pressing-breaking mechanism (300).

The casing (1) and the inclined auger (5) together form the extrusion forming mechanism (100), where an inner diameter of the annulus (4) is larger than an outer diameter of the vertical cylindrical tube (6), thereby creating a gap (19). The gap (19) is configured to form a wrapper of the food with stuffing. A thickness of the wrapper relies on a size of the gap (19). A space between the casing (1) and the inclined auger (5) is a squeezing space (22) configured to squeeze dough. The dough is placed in the squeezing space (22). When the casing (1) is fixed and the inclined auger (5) rotates, the dough is forced downward and squeezed out from the gap (19), thereby forming the wrapper that is continuous, cylindrical and hollow.

The inner cavity of the inclined auger (5) and the vertical auger (8) together form the feeding mechanism (200), where the inner cavity of the inclined auger (5) is the stuffing-bearing space (7), and the stuffing is placed in the stuffing bearing space (7), in other words, the stuffing is placed in the inner cavity of the inclined auger (5). When the stuffing is required to fill the wrapper, the vertical auger (8) rotates to force the stuffing downward through the vertical cylindrical tube (6). The amount of the stuffing wrapped into the wrapper relies on a rotation angle of the vertical auger (8) rotates.

The first pressing edge (9) and the second pressing edge (10) together form the pressing-breaking mechanism (300), where the first pressing edge (9) and the second pressing edge (10) rotate around the two link-shafts (3). A first pressing surface (14) is provided on the first pressing edge (9), and a second pressing surface (18) is provided on the second pressing edge (10). The first pressing surface (14) is tilted with respect to the second pressing surface (18). A first breaking edge (15) is located at a middle of the first pressing surface (14), and a second breaking edge (16) is located at a middle of the second pressing surface (18). The first breaking edge (15) and the second breaking edge (16) are parallel and staggered. In order to ensure that breaking and pressing do not disturb each other, heights of the first and second breaking edges should be half of an edge thickness of the food. When two ends of a section of the wrapper are required to be pressed and sealed, the first and second pressing edges simultaneously press the wrapper, so that an upper edge of the food, i.e., a lower edge of next food is pressed and broken.

The inclined auger (5) has two functions. Firstly, an outer surface of the inclined auger facilitates the forming of the wrapper, and the inner cavity of the inclined auger is a container of stuffing.

### BRIEF DESCRIPTION OF THE DRAWINGS

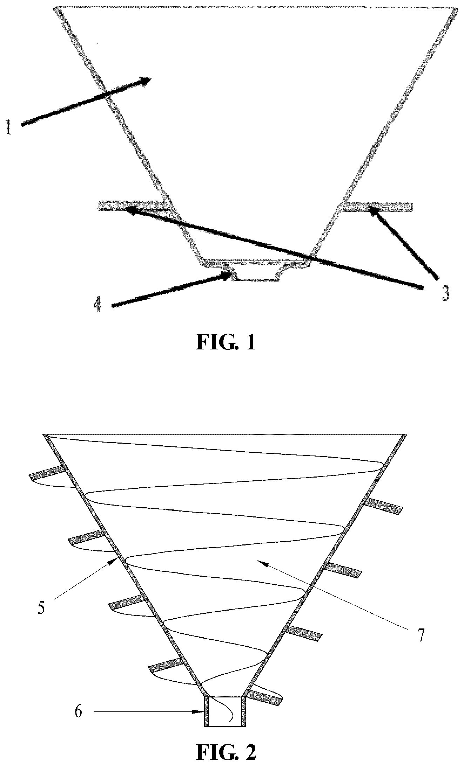

Fig. 1 is a cross-sectional view of a casing (1), where axes of the casing (1) and two link-shafts (3) are in a cutting plane of the casing.
Fig. 2 is a cross-sectional view of an inclined auger (5), where an axis of the inclined auger (5) is a cutting plane of the inclined auger.

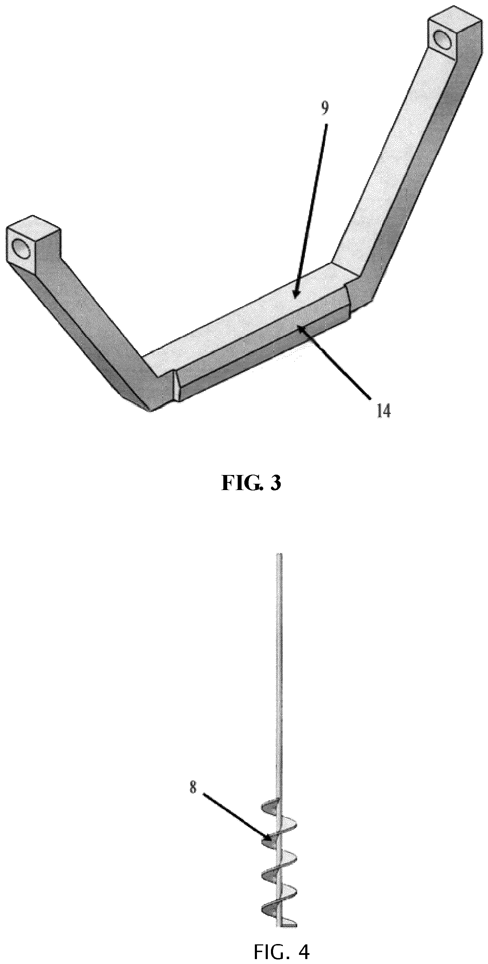

Fig. 3 is an axial side view of a first pressing edge (9).
Fig. 4 is a front view of a vertical auger (8).

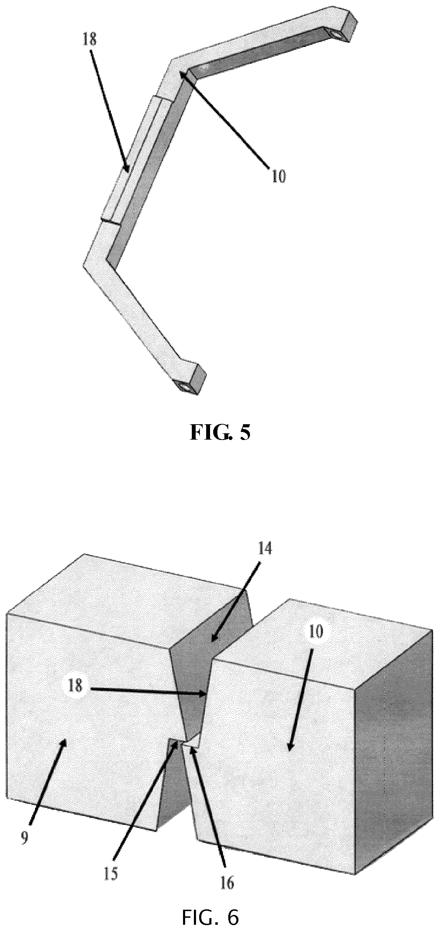

Fig. 5 is an axial side view of a second pressing edge (10).
Fig. 6 is a cross-sectional view showing how the first pressing edge (9) and the second pressing edge (10) press food edges, where axes of the casing (1) and the inclined auger (5) are in a cutting plane of the first and second pressing edges, and axes of the two link-shafts (3) is perpendicular to the cutting plane of the first and second pressing edges.

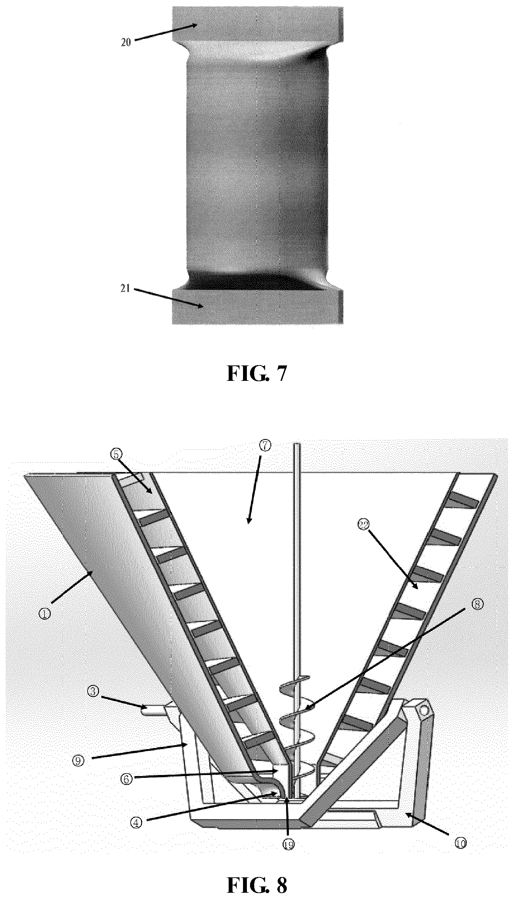

Fig. 7 shows an external profile of food with stuffing processed in the invention.
Fig. 8 is an axial side view of a processing device provided in the invention, where a cross-sectional view of the casing (1) and the inclined auger (5) is shown herein, and the axes of the casing (1) and the inclined auger (5) are in a cutting plane of the casing and the inclined auger, and the axes of the two link-shafts (3) are perpendicular to the cutting plane of the casing and the inclined auger passes.

### DETAILED DESCRIPTION OF EMBODIMENTS

The procedures of making the food with stuffing are described as follows. The first pressing edge (9) and the second pressing edge (10) simultaneously press and break the wrapper without filling the stuffing for sealing a lower edge (21) of the food. The inclined auger (5) rotates to form a wrapper with a required length, and the stuffing fills the wrapper, and then the first pressing edge and the second pressing edge simultaneously press and break the wrapper. A sequence of steps of filling and pressing is continuously performed to prepare the food with stuffing one by one.

## Claims

1. A device for processing food with stuffing, comprising:
a casing (1);
an inclined auger (5);
a vertical auger (8);
a first pressing edge (9); and
a second pressing edge (10);
the casing (1) and the inclined auger (5) together form an extrusion forming mechanism (100);
the first pressing edge (9) and the second pressing edge (10) together form a pressing-breaking mechanism (300);
**characterized in that**, the inclined auger (5) has an inner cavity formed in a hollow stem of the inclined auger; and the vertical auger (8) is arranged in the inner cavity of the inclined auger (5); and the stuffing is placed in the inner cavity of the inclined auger (5);
the casing (1) has an inverted cone shape; the inner cavity of the inclined auger (5) has an inverted cone shape; an external profile of the inclined auger (5) has an inverted cone shape;
the inner cavity of the inclined auger (5) and the vertical auger (8) together form a feeding mechanism (200) for feeding and loading the stuffing; and the feeding mechanism (200) is embedded in the extrusion forming mechanism (100);
the first pressing edge (9) and the second pressing edge (10) are linked to two link-shafts (3) around which the first pressing edge (9) and the second pressing edge (10) rotate; the two link-shafts (3) are horizontally provided on an outer surface of the casing (1) and axes of the two link-shafts (3) are coincident and perpendicularly intersect with a center axis of the casing (1); and
a first pressing surface (14) is provided on the first pressing edge (9), and a second pressing surface (18) is provided on the second pressing edge (10); the first pressing surface (14) is tilted with respect to the second pressing surface (18).

2. A method of preparing the food using the device for processing food with stuffing according to claim 1, comprising: pressing and breaking one end of a wrapper; filling the stuffing into the wrapper; and pressing and breaking the other end of the wrapper filled with the stuffing.

## Patentansprüche

1. Vorrichtung zur Verarbeitung von Lebensmitteln mit Füllung, umfassend:
ein Gehäuse (1);
eine geneigte Schnecke (5);
eine vertikale Schnecke (8);
eine erste Presskante (9); und
eine zweite Presskante (10);
wobei das Gehäuse (1) und die geneigte Schnecke (5) zusammen einen Extrusionsformmechanismus (100) bilden,
wobei die erste Presskante (9) und die zweite Presskante (10) zusammen einen Press-Brech-Mechanismus (300) bilden,
**dadurch gekennzeichnet, dass** die geneigte Schnecke (5) einen inneren Hohlraum aufweist, der in einem hohlen Schaft der geneigten Schnecke ausgebildet ist; und wobei die vertikale Schnecke (8) in dem inneren Hohlraum der geneigten Schnecke (5) angeordnet ist; und wobei die Füllung in dem inneren Hohlraum der geneigten Schnecke (5) angeordnet ist;
wobei das Gehäuse (1) eine umgekehrte Kegelform hat und der innere Hohlraum der geneigte Schnecke (5) eine umgekehrte Kegelform hat und ein äußeres Profil der geneigte Schnecke (5) eine umgekehrte Kegelform hat;
wobei der innere Hohlraum der geneigten Schnecke (5) und die vertikale Schnecke (8) zusammen einen Zuführmechanismus (200) zum Zuführen und Laden der Füllung bilden; wobei der Zuführmechanismus (200) in den Extrusionsformmechanismus (100) eingebettet ist;
wobei die erste Presskante (9) und die zweite Presskante (10) mit zwei Gelenkwellen (3) verbunden sind, um die die erste Presskante (9) und die zweite Presskante (10) sich drehen; wobei die beiden Gelenkwellen (3) horizontal an einer Außenfläche des Gehäuses (1) vorgesehen sind und die Achsen der beiden Gelenkwellen (3) zusammenfallen und sich senkrecht mit einer Mittelachse des Gehäuses (1) schneiden; und
wobei eine erste Pressfläche (14) an der ersten Presskante (9) vorgesehen ist und eine zweite Pressfläche (18) an der zweiten Presskante (10) vorgesehen ist, wobei die erste Pressfläche (14) in Bezug auf die zweite Pressfläche (18) geneigt ist.

2. Verfahren zur Zubereitung des Lebensmittels unter Verwendung der Vorrichtung zur Verarbeitung von Lebensmitteln mit Füllung gemäß Anspruch 1, umfassend: Pressen und Brechen eines Endes einer Hülle; Einfüllen der Füllung in die Hülle; und Pressen und Brechen des anderen Endes der mit der Füllung gefüllten Hülle.

## Revendications

1. Dispositif de traitement d'aliment avec farce, comprenant:
un carter (1);
une tarière inclinée (5);
une tarière verticale (8);
un premier bord de pression (9); et
un deuxième bord de pression (10);
ledit carter (1) et ladite tarière inclinée (5) forment ensemble un mécanisme de formage par extrusion (100);
ledit premier bord de pression (9) et ledit second bord de pression (10) forment ensemble un mécanisme de pressage-rupture (300);
**caractérisé en ce que** ladite tarière inclinée (5) a une cavité intérieure formée dans une tige creuse de ladite tarière inclinée; et ladite tarière verticale (8) est agencée dans ladite cavité intérieure de ladite tarière inclinée (5); et ladite farce est placée dans ladite cavité interne de ladite tarière inclinée (5);
ledit carter (1) a une forme de cône inversé; ladite cavité intérieure de ladite tarière inclinée (5) a une forme de cône inversé; un profil externe de ladite tarière inclinée (5) a une forme de cône inversé;
ladite cavité interne de ladite tarière inclinée (5) et ladite tarière verticale (8) forment ensemble un mécanisme d'alimentation (200) pour alimenter et charger ladite farce; et ledit mécanisme d'alimentation (200) est intégré dans ledit mécanisme de formage par extrusion (100);
ledit premier bord de pression (9) et ledit deuxième bord de pression (10) sont reliés à deux arbres de liaison (3) autour desquels ledit premier bord de pression (9) et ledit deuxième bord de pression (10) tournent; lesdits deux arbres de liaison (3) sont disposés horizontalement sur une surface extérieure dudit carter (1) et les axes desdits deux arbres de liaison (3) coïncident et se croisent perpendiculairement avec un axe central dudit carter (1); et
une première surface de pression (14) est prévue sur ledit premier bord de pression (9), et une seconde surface de pression (18) est prévue sur ledit second bord de pression (10); ladite première surface de pression (14) est inclinée par rapport à ladite seconde surface de pression (18) .

2. Procédé de préparation dudit aliment utilisant ledit dispositif de traitement d'aliment avec farce selon la revendication 1, comprenant: presser et casser une extrémité d'une enveloppe; remplir ladite farce dans ladite enveloppe; et presser et casser l'autre extrémité de ladite enveloppe remplie de ladite farce.
